# EUROPEAN PATENT APPLICATION

(11) **EP 3 296 171 A1**
(43) Date of publication of application: **21.03.2018**
(21) Application number: 17780976.1
(22) Date of filing: 25.07.2017
(51) Int. Cl.: B60W 10/02, B60W 10/06, B60W 40/076, B60W 30/18, B60W 10/18, B60K 23/02, F16D 48/02

(54) **VEHICLE DRIVING APPARATUS, VEHICLE DRIVING METHOD, AND VEHICLE COMPRISING SAME**

(30) Priority: 25.07.2016 KR 20160094302
(71) Applicant: Han, Seung Woo, Incheon 22003 (KR)
(72) Inventor: Han, Seung Woo, Incheon 22003 (KR)
(74) Representative: Vossius & Partner Patentanwälte Rechtsanwälte mbB
(86) International application number: PCT/KR2017/008019
(87) International publication number: WO 2018/021809

(57) **Abstract**

Disclosed herein is a vehicle driving device that includes a control unit, at least one drive restraint body controlled by the control unit to restrain driving of a vehicle, and a drive restraint valve allowing an oil pressure to be supplied or not to the drive restraint body, wherein the drive restraint body is positioned at an axle and is operated to stop rotation of the axle so that the vehicle is maintained in a stopped state.

## Description

### TECHNICAL FIELD

Exemplary embodiments of the present invention relate to a vehicle driving device, a method for vehicle driving, and a vehicle including the same.

### BACKGROUND ART

When gears are shifted in a power transmission device of an engine equipped with a manual transmission in a vehicle, there is a need to temporarily cut off the power transmission of the engine to drive wheels for smooth gearshifting in the transmission. Accordingly, the vehicle may include a clutch, which is mounted between the engine and the transmission to arbitrarily control the power of the engine, due to the need for power cut-off.

The clutch is a coupling device that temporarily cuts off or supplies the power of the engine in the vehicle. The clutch is used for connection or disconnection between a shaft and another shaft. The use of the clutch enables a driven shaft to be stopped without stopping a motor and enables gears to be shifted for change of speed. Any clutch may perform the disconnection between a shaft and another shaft without stopping or moving the shafts.

A conventional vehicle includes a single clutch, and gears may be shifted in a transmission when the clutch is turned on. The clutch is maintained in an OFF state in the case where the vehicle is stopped, and the vehicle may be driven when the clutch is turned off as the vehicle is started.

However, if a sufficient spring force is not applied to a pressure plate and a clutch disc due to misconnection of a clutch connection device in the conventional vehicle having the clutch, the vehicle may roll. In addition, a jerk may occur according to the state of the clutch changed together with the starting of the vehicle.

### [Related Art Document]

### [Patent Document]

(Patent Document 1) Korean Utility Model No. 20-0133292 (October 09, 1998)

### DISCLOSURE

### TECHNICAL PROBLEM

Accordingly, the present invention has been made in view of the above-mentioned issues, and is to provide a vehicle driving device capable of preventing a vehicle from rolling when gears are shifted, and a method of controlling the same.

In addition, the present invention is to provide a vehicle driving device capable of preventing a jerk from occurring in a vehicle when the vehicle is started, and a method of controlling the same.

Furthermore, the present invention is to provide a vehicle driving device capable of allowing a vehicle to be maintained in a parked state by cutting off power from a clutch even when the vehicle is started, so that the clutch functions as a brake, and a method of controlling the same.

### TECHNICAL SOLUTION

In accordance with an aspect of the present invention, a vehicle driving device includes a control unit, at least one drive restraint body controlled by the control unit to restrain driving of a vehicle, and a drive restraint valve allowing an oil pressure to be supplied or not to the drive restraint body, wherein the drive restraint body is positioned at an axle and is operated to stop rotation of the axle so that the vehicle is maintained in a stopped state.

The drive restraint body may further include drive restraint bodies positioned at respective wheels, and the drive restraint bodies positioned at the respective wheels may be pressed from friction objects in both directions thereof to apply braking forces to the wheels.

The drive restraint body may include a service brake and a parking brake respectively positioned and operated at one and the other of the friction objects, and the service brake and the parking brake may be operated by the oil pressure supplied thereto.

Alternatively, the drive restraint bodies positioned at the respective wheels may be pressed from friction objects in one direction thereof to apply braking forces to the wheels.

Each of the drive restraint bodies may include a service brake having a service brake block and a parking brake having a parking brake block.

The service brake block and the parking brake block may overlap each other in a forward direction of the vehicle and in a direction of a drive shaft of the axle.

Alternatively, the service brake block and the parking brake block may overlap each other in a direction perpendicular to the direction of the drive shaft.

The service brake block may be positioned closer to a center of rotation of the drive shaft than the parking brake block.

Alternatively, the parking brake block may be positioned closer to a center of rotation of the drive shaft than the service brake block.

In addition, there is provided a vehicle driving device that includes a control unit configured to control a drive restraint valve by a predetermined angle of an accelerator pedal or a revolution per minute (RPM) of an engine.

The drive restraint body may include a first clutch for forward driving and a second clutch for reverse driving, and the drive restraint valve may include a first clutch valve configured to turn on/off the first clutch, and a second clutch valve configured to turn on/off the second clutch.

The control unit may control the first and second clutch valves by a predetermined angle of an accelerator pedal or an RPM of an engine.

The predetermined angle of the pedal or the predetermined RPM of the engine may be determined by a gradient of the ground on which the vehicle is located.

When an angle of the pedal or an RPM of the engine reaches a predetermined value according to the gradient, the first or second clutch valve may be turned off.

When the angle of the pedal or the RPM of the engine reaches the predetermined value so that the first clutch valve is turned off, the vehicle may reverse by cut-off of power through the first clutch.

When the angle of the pedal or the RPM of the engine reaches the predetermined value so that the second clutch valve is turned off, the vehicle may be driven forward by cut-off of power through the second clutch.

When the angle of the pedal is less than a predetermined angle or the RPM of the engine is less than a predetermined RPM value in the vehicle, the first and second clutch valves may be simultaneously maintained in an ON state so that the vehicle is maintained in the stopped state.

The first and second clutches may be simultaneously turned on at the time when the vehicle is started, with the consequence that the vehicle is maintained in the stopped state.

The control unit may read a vehicle signal indicative of the angle of the pedal or the RPM of the engine to control the first and second clutches.

The drive restraint body may include a parking brake, and the drive restraint valve may include a parking brake valve.

The drive restraint valve may be operable by an anti-roll-back button.

When the anti-roll-back button is turned on, the parking brake valve may be turned off so that the vehicle is maintained in the stopped state.

When an accelerator pedal is pressed in the state in which the vehicle is stopped, the parking brake valve may be slowly turned on according to the RPM, and when the RPM is equal to or greater than a predetermined value, the vehicle may be driven.

The drive restraint body may include a first clutch for forward driving, a second clutch for reverse driving, and a parking brake, and the drive restraint valve may include a first clutch valve configured to turn on/off the first clutch, a second clutch valve configured to turn on/off the second clutch, and a parking brake valve configured to allow the oil pressure to be supplied or not to the parking brake.

In accordance with another aspect of the present invention, a method for vehicle driving includes allowing an oil pressure to be supplied or not to a drive restraint body, for restraining driving of a vehicle, using a drive restraint valve, and controlling the drive restraint valve by a predetermined angle of an accelerator pedal or an RPM of an engine.

The drive restraint body may include a first clutch for forward driving and a second clutch for reverse driving, and the drive restraint valve may include a first clutch valve configured to turn on/off the first clutch, and a second clutch valve configured to turn on/off the second clutch.

The first and second clutch valves may be controlled by the predetermined angle of the accelerator pedal or the RPM of the engine.

The predetermined angle of the pedal or the predetermined RPM of the engine may be determined by a gradient of the ground on which the vehicle is located.

When an angle of the pedal or an RPM of the engine reaches a predetermined value according to the gradient, the first or second clutch valve may be turned off.

When the angle of the accelerator pedal or the RPM of the engine reaches the predetermined value so that the first clutch valve is turned off in order to reverse the vehicle, power of the first clutch may be cut off.

When the angle of the pedal or the RPM of the engine reaches the predetermined value so that the second clutch valve is turned off in order to forwardly driving the vehicle, power may be cut off through the second clutch.

When the angle of the pedal is less than a predetermined angle or the RPM of the engine is less than a predetermined RPM value in the vehicle, the first and second clutch valves may be simultaneously maintained in an ON state so that the vehicle is maintained in a stopped state.

The first and second clutches may be simultaneously turned on at the time when the vehicle is started, with the consequence that the vehicle is maintained in a stopped state.

The drive restraint body may include a parking brake, and the drive restraint valve may include a parking brake valve.

The drive restraint valve may be operated by an anti-roll-back button.

When the anti-roll-back button is turned on, the parking brake valve may be turned off so that the vehicle is maintained in a stopped state.

The drive restraint body may include a first clutch for forward driving, a second clutch for reverse driving, and a parking brake, the drive restraint valve may include a first clutch valve configured to turn on/off the first clutch, a second clutch valve configured to turn on/off the second clutch, and a parking brake valve configured to allow the oil pressure to be supplied or not to the parking brake, and the first and second clutches and the parking brake valve may be controlled according to the predetermined angle of the accelerator pedal or the RPM of the engine.

In accordance with a still another aspect of the present invention, there is provided a vehicle including the vehicle driving device according to any one of the above aspects.

In accordance with a further aspect of the present invention, there is provided a vehicle controlled by the method for vehicle driving according to any one of the above aspects.

### ADVANTAGEOUS EFFECTS

In accordance with exemplary embodiments of the present invention, a vehicle driving device can prevent a vehicle from rolling when gears are shifted.

In addition, it is possible to prevent a jerk from occurring in the vehicle when the vehicle is started.

Furthermore, the vehicle can be maintained in a parked state by cutting off power from a clutch even when the vehicle is started. Accordingly, the clutch can function as a brake.

### BRIEF DESCRIPTION OF DRAWINGS

Fig. 1 is a diagram illustrating a state in which both clutches are off in a vehicle driving device according to an embodiment of the present invention.
Fig. 2 is a diagram illustrating a state in which a first clutch is on in the vehicle driving device according to the embodiment of the present invention.
Fig. 3 is a diagram illustrating a state in which a second clutch is on in the vehicle driving device according to the embodiment of the present invention.
Fig. 4 is a diagram illustrating signals connected to a control unit according to the embodiment of the present invention.
Figs. 5 and 6 are a conceptual diagram illustrating a state in which a parking brake is off, and a cross-sectional view illustrating a parking release valve, in a brake emergency release device according to a first embodiment of the present invention.
Figs. 7 and 8 are a conceptual diagram illustrating a state in which the parking brake is on, and a cross-sectional view illustrating a parking release valve, in the brake emergency release device according to the first embodiment of the present invention.
Figs. 9 and 10 are a conceptual diagram illustrating an emergency situation, and a cross-sectional view illustrating a parking release valve, in the brake emergency release device according to the first embodiment of the present invention.
Fig. 11 is a partial cross-sectional view illustrating an axle and wheels according to embodiments of the present invention.
Figs. 12 and 13 are views illustrating a braking unit according to a third embodiment of the present invention.
Figs. 14 and 15 are views illustrating a braking unit according to a fourth embodiment of the present invention.
Fig. 16 is a view illustrating a braking unit according to a fifth embodiment of the present invention.

### BEST MODE FOR INVENTION

Reference will now be made in detail to embodiments of the present invention, examples of which are illustrated in the accompanying drawings. The present invention may, however, be embodied in different forms and should not be construed as limited to the embodiments set forth herein.

In certain embodiments, detailed descriptions of technology well known in the art may be omitted to avoid obscuring appreciation of the disclosure by a person of ordinary skill in the art. In addition, the terms used in the specification are terms defined in consideration of functions of the present invention, and these terms may vary with the intention or practice of a user or an operator. Therefore, these terms should be defined based on the entire content disclosed herein.

It will be understood that the present disclosure is defined only by the claims. These embodiments are provided so that this disclosure will be thorough and complete, and will fully convey the scope of the disclosure to those skilled in the art.

In the following description, the pressure supplied for application and release of a braking force may be a fluid pressure, in which case the fluid pressure may be an oil or air pressure. Hereinafter, the term "supply of pressure" means the supply of the oil or air pressure.

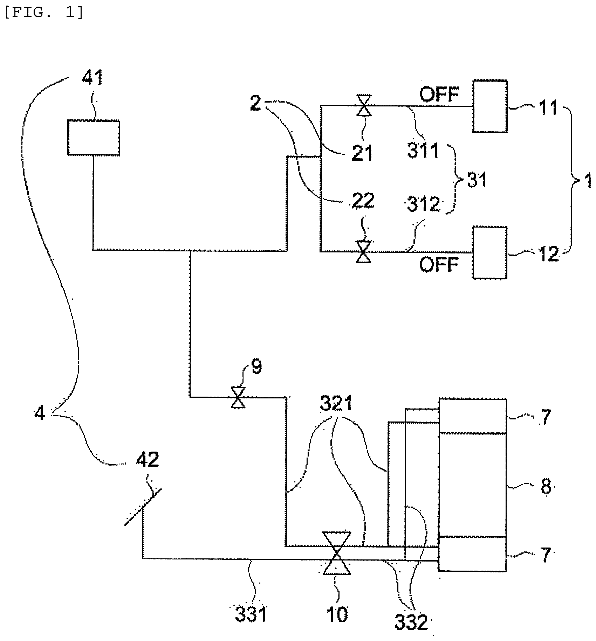

Hereinafter, for specific details of a method for vehicle driving according to an embodiment of the present invention, a vehicle driving device and a method of controlling the same, the vehicle driving device including a drive restraint body to restrain the driving of a vehicle, will be described according to the ON/OFF state of a drive restraint valve for allowing an oil pressure to be supplied or not to the drive restraint body, with respect to Figs. 1 to 4.

In the following description, the pressure supplied for application and release of a braking force may be a fluid pressure, in which case the fluid pressure may be an oil or air pressure. Hereinafter, the term "supply of pressure" means the supply of the oil or air pressure.

The drive restraint body of the vehicle driving device according to the embodiment of the present invention may include a first clutch 11 and a second clutch 12. In addition, the drive restraint valve may include a first clutch valve 21 and a second clutch valve 22.

In the embodiment, the friction object, which allows a brake block to apply a braking force to a vehicle through friction, will be described below to be a brake disc 110, 110a, or 110b.

Figs. 1 to 3 are diagrams illustrating the vehicle driving device, which is driven by a clutch 1, according to the embodiment of the present invention.

The vehicle driving device according to the embodiment of the present invention may include a clutch 1, a clutch valve 2, a line 3, a pedal 4, a control unit 5, an axle 100 including a brake assembly 7, and the like.

The clutch 1 mounted to the vehicle is a coupling device that temporarily cuts off or supplies the power of an engine. The vehicle may be driven by transmission of power when the clutch 1 is turned on, whereas it may not be driven by cut-off of power when the clutch 1 is turned off. The clutch 1 may be classified into a first clutch 11 and a second clutch 12 so that they are arranged.

The first clutch 11 may transmit power for forward movement, whereas the second clutch 12 may transmit power for reverse movement.

The clutch valve 2 may be connected to the clutch 1 to determine the ON/OFF state of the clutch 1. The clutch valve 2 may be positioned in the middle of the line 3, and may supply a pressure or block the supply of the pressure. When the clutch valve 2 is turned off, a pressure is not supplied to the clutch 1 with the consequence that the clutch 1 is turned off. Therefore, the clutch 1 may not transmit power. On the other hand, when the clutch valve 2 is turned on, a pressure is supplied to the clutch 1 with the consequence that the clutch 1 is turned on. Therefore, the clutch 1 may transmit power to drive the vehicle.

The clutch valve 2 may include a first clutch valve 21 and a second clutch valve 22. The first clutch valve 21 may be connected to the first clutch 11, and the second clutch valve 22 may be connected to the second clutch 12.

The first clutch valve 21 connected to the first clutch 11 may control forward driving. The first clutch 11 is turned off when the first clutch valve 21 is off, with the consequence that the vehicle is not driven. The first clutch 11 transmits power when the first clutch valve 21 is on, with the consequence that the vehicle is driven.

The second clutch valve 22 connected to the second clutch 12 may control reverse driving. The second clutch 12 is turned off when the second clutch valve 22 is off, with the consequence that the vehicle is not driven. The second clutch 12 transmits power when the second clutch valve 22 is on, with the consequence that the vehicle is driven.

The line 3 is a hydraulic or pneumatic supply line. The line 3 may include a clutch line 31 through which an oil or air pressure may be supplied to the clutch 1, a parking brake line 32 through which an oil or air pressure may be supplied to a parking brake, and a service brake line 33 through which an oil or air pressure may be supplied to a service brake.

The clutch line 31 may include a first clutch line 311 and a second clutch line 312. The first clutch line 311 may be connected to the first clutch valve 21 and to the first clutch 11. Accordingly, the oil or air pressure may be supplied via the first clutch valve 21 to the first clutch 11.

The second clutch line 312 may be connected to the second clutch valve 22 and to the second clutch 12. Accordingly, the oil or air pressure may be supplied via the second clutch valve 22 to the second clutch 12.

The pedal 4 may include an accelerator pedal 41 and a service brake pedal 42.

The accelerator pedal 41 may serve to increase the torque of the engine to increase the force transmitted to the vehicle. The service brake pedal 42 may serve to provide a braking force for braking the vehicle.

The control unit 5 may read a signal indicative of a predetermined angle of the pedal 4 or a revolution per minute (RPM) of the engine, to control whether the vehicle is heading and the speed of the vehicle. The control unit 5 may read the signal and turn on/off the clutch valve 2 to turn on/off the clutch 1. In addition, the control unit 5 may turn on/off the clutch 1 and shift gears through a transmission 6 to change the speed of the vehicle.

However, the control unit 5 may read signals generated by an output speed sensor, an emergency brake switch, a filter electronic control unit (FECU), a temperature sensor, a brake valve, a pressure sensor, etc., as wells as the signal generated by the pedal 4.

The transmission 6 is a transmission that changes the power generated by the engine into torque required for the speed of the vehicle. The transmission 6 may shift gears by operating the shift lever of the clutch 1 so as to be suitable for the speed of the vehicle.

Referring to Figs. 1 to 3, the accelerator pedal 41 may be connected to the clutch valve 2. The clutch valve 2 may be classified into the first clutch 21 and the second clutch valve 22. The first clutch valve 21 may be connected to the first clutch 11 along the first clutch line 311. The second clutch valve 22 may be connected to the second clutch 12 along the second clutch line 312.

A parking brake valve 9 enables a braking force to be applied to or released from the parking brake (side brake). In addition, it may include a first parking brake line 321 for application or release of a braking force to or from the parking brake, and a second parking brake line 322 that is connected to the brake assembly 7 included in the axle 100.

The service brake line 33 may include first and second service brake lines 331 and 332 through which a pressure may be supplied to or recovered from the service brake for application or release of a braking force thereto or therefrom. The second service brake line 332 may be connected to the brake assembly 7 included in the axle 100.

The vehicle driving device may include a parking valve 10. The parking valve 10 may control the parking brake and the service brake. The parking valve 10 may be disposed between the first parking brake line 321 and the second parking brake line 322 and between the first service brake line 331 and the second service brake line 332.

Fig. 1 is a diagram illustrating a state in which the clutch 1 (both of the first and second clutches 11 and 12) is off and the vehicle is parked in the vehicle driving device according to the embodiment of the present invention.

Fig. 1 illustrates the state of the vehicle driving device when the vehicle is parked (stopped).

When the vehicle is stopped, the clutch 1 may be maintained in an OFF state. The clutch 1 is maintained in the OFF state since the supply of pressure is blocked on the clutch line 31. The vehicle may be in a parked state.

When the vehicle is started, the clutch 1 may be turned on. When the shift lever (not shown) of the vehicle is in a parking range, the clutch valve 2 is on so that the clutch 1 is maintained in an ON state.

The first clutch 11 for forward driving and the second clutch 12 for reverse driving may be simultaneously turned on, while the vehicle is started. Since the first and second clutches 11 and 12 are simultaneously operated, the vehicle may be maintained in a stopped state without moving in any direction.

Even when the shift lever of the vehicle is in a drive range, both of the first and second clutches 11 and 12 are maintained in the ON state before the accelerator pedal 41 is pressed. Accordingly, the vehicle may be in the parked state.

When the accelerator pedal 41 is pressed, the first and second clutches 11 and 12 are turned off to transmit power, with the consequence that the vehicle may be driven. When the angle of the accelerator pedal 41 or the RPM of the engine reaches a predetermined angle of the accelerator pedal 41 or an RPM of the engine by pressing the accelerator pedal 41, one of the first and second clutches 11 and 12 is turned off. Thus, the vehicle may move by the other clutch that is maintained in the ON state. When the first clutch 11 is turned on in the state in which the second clutch 12 is on, the vehicle may be reversed. On the other hand, when the second clutch 12 is turned off in the state in which the first clutch 11 is on, the vehicle may move forward.

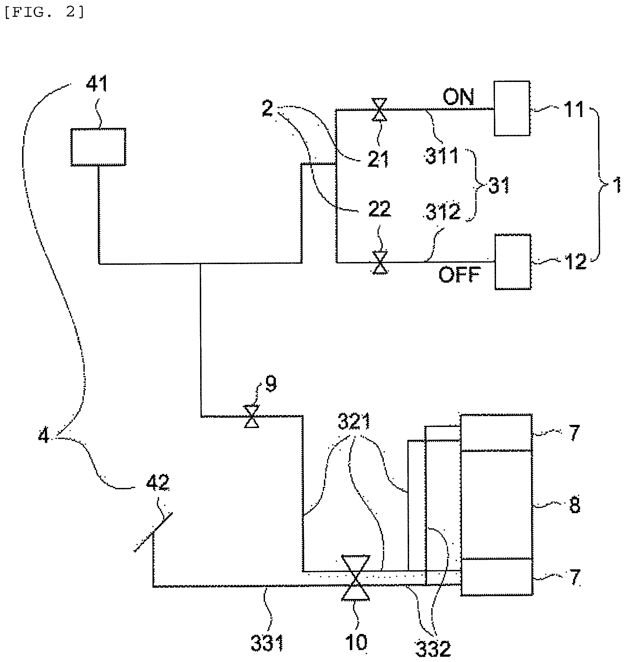

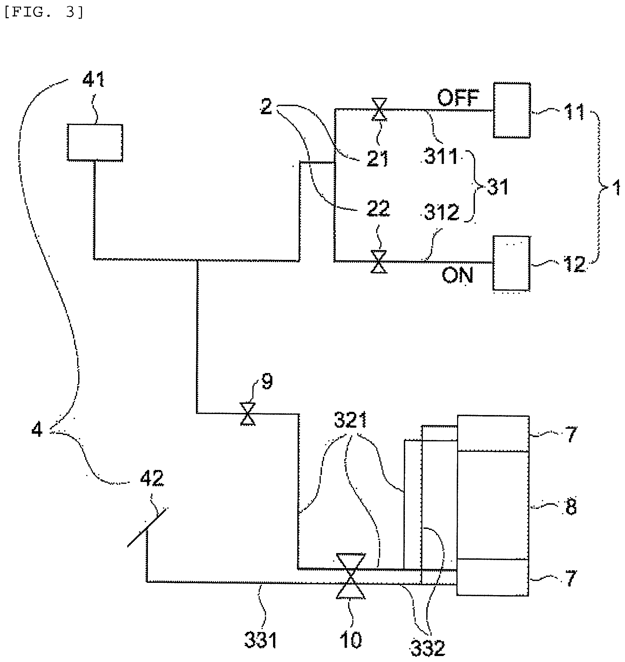

Figs. 2 and 3 are diagrams illustrating a state in which one of the first and second clutches 11 and 12 is on so that the vehicle moves forward or reverses, in the vehicle driving device according to the embodiment of the present invention. Fig. 2 is a diagram illustrating a state in which the first clutch 11 is on so that the vehicle moves forward. Fig. 3 is a diagram illustrating a state in which the second clutch 12 is on so that the vehicle reverses.

When the accelerator pedal 41 is pressed in the state in which the shift lever is in the drive range, the vehicle may be driven. When the same force is applied to the first and second clutches 11 and 12 in the state in which they are on, the vehicle may be maintained in the parked state. In this case, when the accelerator pedal 41 is pressed, the engine RPM of the vehicle may increase. When the RPM of the engine exceeds a predetermined value, the first or second clutch 11 or 12 may be turned off to release the parked state of the vehicle. When the RPM of the engine reaches the predetermined RPM to forwardly or reversely drive the vehicle, the transmission 6 may output power. For example, when the RPM of the engine reaches the predetermined RPM so that the second clutch 12 is turned off, the reverse driving of the vehicle is stopped. Accordingly, the vehicle may move forward by the first clutch 11 that is maintained in the ON state.

The predetermined value of the engine RPM may be determined according to the gradient or the like. For example, in the case of a flatland in which the gradient is "0", the RPM required to drive the vehicle may be from 800 to less than 1000. When the gradient is 5%, the RPM required to drive the vehicle may be about 2000. The value of RPM may increase as the gradient increases.

Moreover, when the pressure of the clutch 1 reaches a predetermined pressure to forwardly or reversely drive the vehicle, the transmission 6 may output power. For example, in the case of a flatland in which the gradient is "0", the pressure of the clutch 1 required to drive the vehicle may be less than 4 bar. When the gradient is 5%, the pressure of the clutch 1 required to drive the vehicle may be from 4 to less than 10 bar. The pressure of the clutch 1 may increase as the gradient increases.

The predetermined value of the engine RPM is a value varied depending on the gradient. The control unit 5 may read a signal indicative of the engine RPM. The value of the engine RPM may be changed depending on the angle of the accelerator pedal 41. The control unit 5 may control whether the vehicle is heading and the speed of the vehicle, in response to the value of the engine RPM.

The predetermined value of the engine RPM may be determined according to the gradient. When the engine RPM reaches a certain value, the first or second clutch 11 or 12 may be turned off so that the vehicle is driven.

The control unit 5 may be operated along with the engine RPM that is changed depending on the angle of the accelerator pedal 41. The engine RPM may be combined with the output RPM of the transmission 6. The control unit 5 may read a signal indicative of the angle of the accelerator pedal 41, the engine RPM, or the like and may control the transmission 6 to control the speed of the vehicle.

The engine RPM may be read by an electronic control unit that is connected to the engine of the vehicle. In more detail, the control unit 5 reads a signal indicative of the predetermined angle of the accelerator pedal 41 or the value of the engine RPM. For example, the angle of the accelerator pedal 41 may be read by a linear sensor.

In the vehicle driving device according to the embodiment of the present invention, the first and second clutches 11 and 12 are turned on while the vehicle is started. The first and second clutches 11 and 12 are on before the predetermined RPM or pressure is applied thereto. Since the same power is applied to the first and second clutches 11 and 12, the vehicle may be maintained in the parked state.

A conventional clutch is off in an initial state in which a vehicle is started, and is then turned on when the vehicle moves forward. Hence, rolling and a jerk may occur in the vehicle.

However, the vehicle driving device of the present invention includes two clutches 1 that are simultaneously turned on, with the consequence that the vehicle is maintained in the stopped state. Then, one of the two clutches 1 is turned off for forward or reverse driving of the vehicle. Therefore, it is possible to prevent occurrence of rolling or a jerk. In detail, the clutches 1, which are arranged in both sides, are turned on while the vehicle is started and power is then applied to the clutches 1 so that the vehicle is driven. In this case, the same force is applied to the clutches 1. Accordingly, it is possible to prevent rolling caused when the clutches is changed from the OFF state to the ON state.

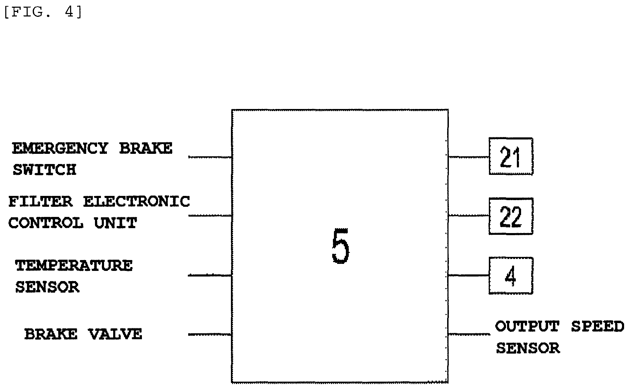

Fig. 4 is a diagram illustrating signals connected to the control unit according to the embodiment of the present invention.

Referring to Fig. 4, the control unit 5 may control the first and second clutch valves 21 and 22. The control unit 5 may read a signal indicative of the engine RPM or the angle of the accelerator pedal 41 to control the first and second clutch valves 21 and 22. The first and second clutches 11 and 12 may be turned on/off according to the control of the first and second clutch valves 21 and 22. The vehicle may be reversed when the first clutch 11 is turned off, whereas the vehicle may move forward when the second clutch 12 is turned off. When both of the first and second clutches 11 and 12 are in the ON state, the vehicle may be maintained in the parked state.

The control unit 5 may read signals generated by the transmission 6, the filter electronic control unit, the temperature sensor, the speed sensor, the accelerator pedal 41, the output speed sensor, the pressure sensor, etc., as wells as the signal generated by the first and second clutch valves 21 and 22. The control unit 5 may read the signals and control the clutch valve 2 to turn on/off the clutch 1. In addition, the control unit 5 may control the speed of the transmission 6 in response to the signals.

A vehicle driving device according to another embodiment of the present invention includes a restraint body and a drive restraint valve. The restraint body may include a parking brake and the drive restraint valve may include a parking brake valve 9.

Although not illustrated in the drawings, the vehicle driving device may further include an anti-roll-back button. When a user turns on the anti-roll-back button, the parking brake valve 9 may be turned off to block supply of oil pressure to a parking brake line 32. When the oil pressure is not supplied to the parking brake line 32, the parking brake may be operated so that a vehicle is maintained in a stopped state. Accordingly, the vehicle may be maintained in the stopped or parked state without rolling even in a sloping ground.

When the vehicle pulls up a sloping hill, an oil pressure may be slowly supplied to the parking brake line 32 by pressing an accelerator pedal 41. When the revolution per minute (RPM) of an engine is equal to or greater than a predetermined value, the oil pressure may be supplied to the parking brake line 32 so that the operated parking brake is released. Consequently, the vehicle may be driven.

That is, the vehicle driving device according to the present invention may drive the vehicle while preventing the vehicle from rolling by means of at least one of the clutch and the parking brake. In other words, this may be accomplished using only the clutch or only the parking brake. Moreover, it is possible to control the driving of the vehicle using the clutch and the parking brake together.

There may be provided a method of controlling the vehicle driving device according to a further embodiment of the present invention.

An oil pressure may be supplied or not to a drive restraint body for restraining the driving of a vehicle by a drive restraint valve, and the drive restraint valve may be controlled by a predetermined angle of an accelerator pedal or a predetermined RPM of an engine.

The drive restraint body may include a first clutch 11 for forward driving and a second clutch 12 for reverse driving. The drive restraint valve may include a first clutch valve 21 that turns on/off the first clutch and a second clutch valve 22 that turns on/off the second clutch. The first and second clutch valves 21 and 22 may be controlled by a predetermined angle of an accelerator pedal 41 or a predetermined RPM of an engine.

The predetermined angle of the pedal or the predetermined RPM of the engine may be determined by the gradient of the ground on which the vehicle is located. When the angle of the pedal or the RPM of the engine reaches a predetermined value according to the gradient, the first or second clutch valve 21 or 22 may be turned off.

When the angle of the pedal or the RPM of the engine reaches the predetermined value and the first clutch valve 21 is turned off to reverse the vehicle, the power of the first clutch 11 may be cut off.

On the other hand, when the angle of the pedal or the RPM of the engine reaches the predetermined value and the second clutch valve 22 is turned off to forwardly drive the vehicle, the power of the second clutch 12 may be cut off.

When the angle of the pedal is less than a predetermined angle or the RPM of the engine is less than a predetermined value in the vehicle, the vehicle may be maintained in a stopped state by simultaneously maintaining the first and second clutch valves 21 and 22 in an ON state. The vehicle may be maintained in the stopped state by simultaneously turning on the first and second clutches 11 and 12 at the time when the vehicle is started.

The first and second clutch valves 21 and 22 may be controlled by a control unit 5. The first clutch 11 for forward driving may be turned on/off by the first clutch valve 21. The second clutch 12 for reverse driving may be turned on/off by the second clutch valve 22. When the first and second clutches 11 and 12 are simultaneously in the ON state, the vehicle may be parked.

The control unit 5 may receive a signal indicative of the predetermined angle of the accelerator pedal 41 or the RPM of the vehicle.

The angle at which the accelerator pedal 41 is pressed may be changed depending on the gradient. The accelerator pedal 41 may be further pressed as the gradient increases, and the RPM of the vehicle may increase as the accelerator pedal 41 is further pressed. The ON/OFF state of the first and second clutch valves 21 and 22 may be controlled by the control unit 5 receiving the signal.

When the angle of the accelerator pedal 41 reaches a predetermined angle or the engine RPM reaches a predetermined value, the first or second clutch valve 21 or 22 may be turned on. When the first clutch valve 21 is turned off, the first clutch 11 may transmit power so that the vehicle reverses. On the other hand, when the second clutch valve 22 is turned off, the second clutch 12 may transmit power so that the vehicle moves forward.

When the angle of the accelerator pedal 41 is less than a predetermined angle or the engine RPM is less than a predetermined value, the first and second clutch valves 21 and 22 may be simultaneously turned on. Accordingly, since the same power is applied to the first and second clutches 11 and 12, the vehicle may be maintained in the stopped state.

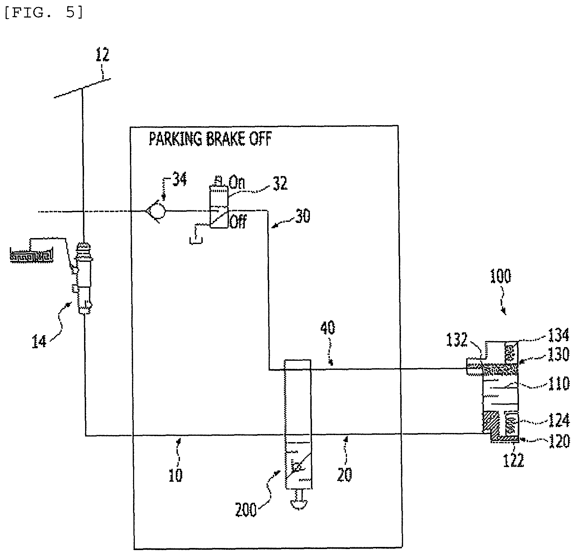

First, as illustrated in Figs. 5, 7, and 9, a brake emergency release device according to the present invention is a device that is used in a negative brake system, and includes a first service brake line 331 through which a pressure may be supplied to or recovered from a service brake for application or release of a braking force thereto or therefrom, and a first parking brake line 321 through which a pressure may be supplied to or recovered from a parking brake for application or release of a braking force thereto or therefrom. In addition, the brake emergency release device includes a second service brake line 332 that is connected to a first chamber 120 of one of brake discs 110 located within a brake assembly 7 to supply a pressure to the first chamber 120, and a second parking brake line 322 that is connected to a second chamber 130 of the other of the brake discs 110 to supply a pressure to the second chamber 130. Here, the respective first and second chambers 120 and 130 may include therein chamber blocks 122 and 132 and elastic means 124 and 134 for elastically supporting the respective chamber blocks 122 and 132. When the pressure is supplied to the first chamber 120, the braking force is applied to the brake by the chamber block 122 against the support force of the elastic means 124. When the pressure is recovered from the first chamber 120, the brake may be released by the restoring force of the elastic means 124. When the pressure is supplied to the second chamber 130 in a state in which the chamber block 132 is elastically supported to apply the braking force to the brake, the brake may be released by the chamber block 132 against the support force of the elastic means 134.

Furthermore, the brake emergency release device according to the embodiment of the present invention includes a parking release valve 200. The parking release valve 200 may switch between a first state (see Figs. 1 and 3), in which the first service brake line 331 communicates with the second service brake line 332 and the first parking brake line 321 communicates with the second parking brake line 322, and a second state (see Fig. 5) in which the first service brake line 331 communicates with the second parking brake line 322. Meanwhile, a separate check valve 34 may be provided on the first parking brake line 331 to control the supply of pressure to the first parking brake line 321.

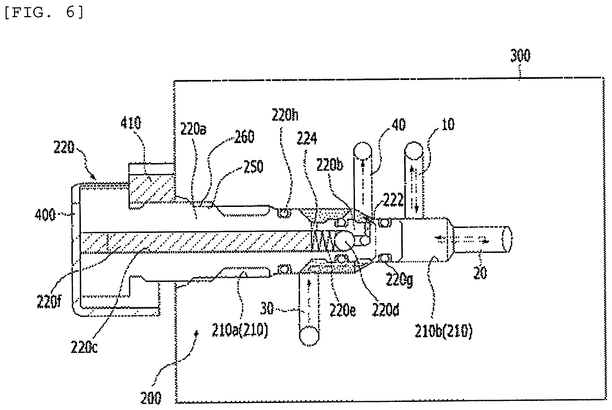

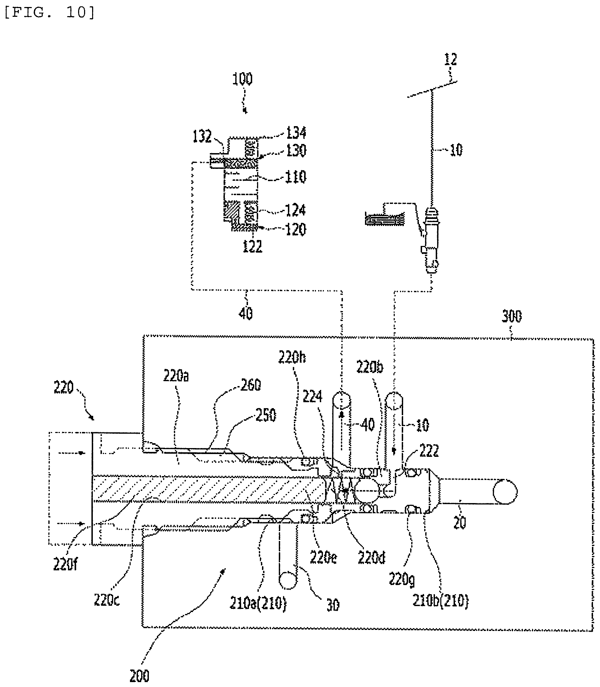

The parking release valve 200 according to the first embodiment of the present invention will be described below in detail with reference to Figs. 6, 8, and 10.

First, the parking release valve 200 may include a spool 220 that is inserted into a valve hole 210 communicating with all of the first service brake line 331, the first parking brake line 321, the second service brake line 332, and the second parking brake line 322. Here, a guide protrusion 250 may be formed on the outer surface of the spool 220 such that the spool 220 is guided within the valve hole 210, and a guide groove 260 may be formed on the inner surface of the valve hole 210 at a position corresponding to the guide protrusion 250 so as to guide the guide protrusion 250. Although not illustrated in the drawings, on the contrary, a guide protrusion may be formed on the outer surface of the spool 220 so as to protrude radially and extend longitudinally, and a guide groove may be formed on the inner surface of the valve hole 210 so as to correspond to the guide protrusion.

In the following description, the shallow direction of the valve hole 210, namely the left direction in Figs. 6, 8, and 10, will be designated as the outer side of the valve hole 210, and the deep direction of the valve hole 210, namely the right direction in Figs. 6, 8, and 10, will be designated as the inner side of the valve hole 210.

Here, the valve hole 210 may be formed, for example, in a tubular body 300 provided in the brake system. The tubular body 300 means a structure having a conduit through which the lines, such as the first service brake line 331, the first parking brake line 321, the second service brake line 332, and the second parking brake line 322, included in the brake emergency release device according to the present invention easily communicate with one another.

The valve hole 210 may communicate with all of the first service brake line 331, the first parking brake line 321, the second service brake line 332, and the second parking brake line 322. The spool 220 is inserted into the valve hole 210 so as to be movable by a predetermined distance within the valve hole 210. By the movement of the spool 220 by the predetermined distance, the first service brake line 331, the first parking brake line 321, the second service brake line 332, and the second parking brake line 322, which communicate with the valve hole 210, may selectively communicate with one another.

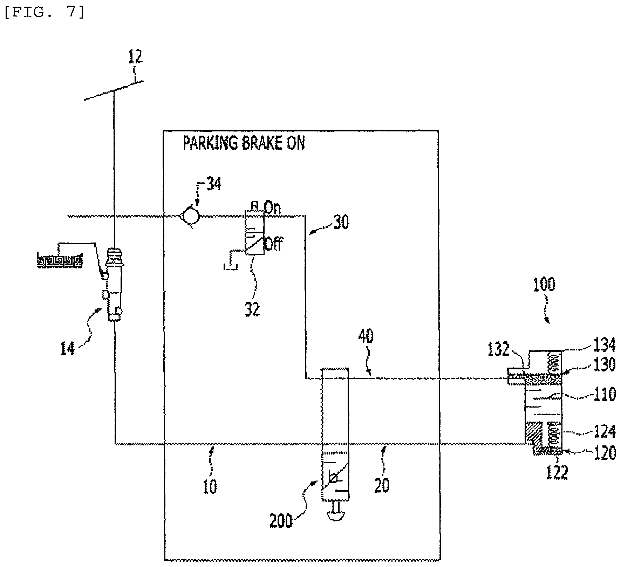

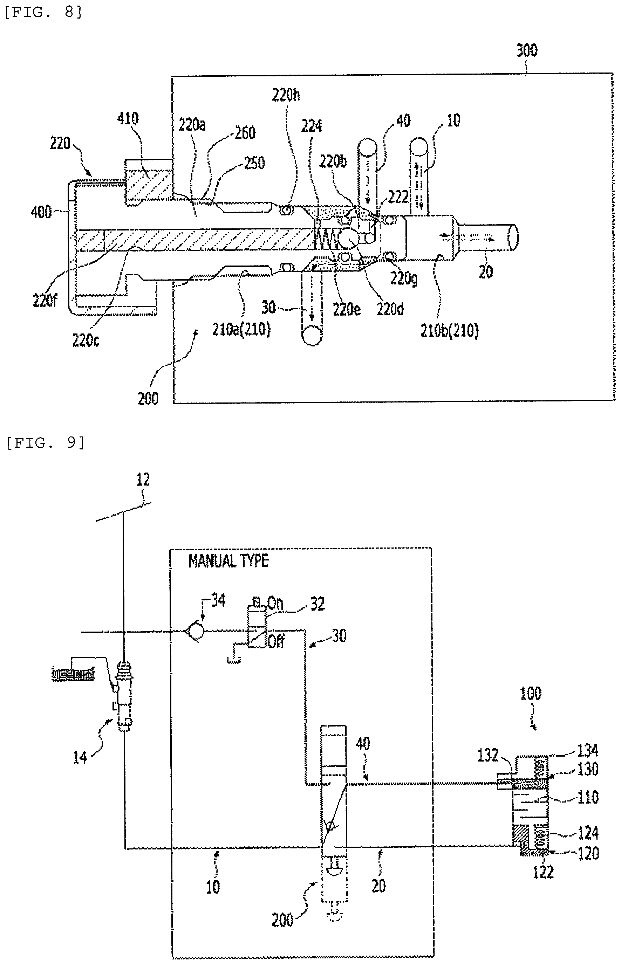

Here, the predetermined distance is a distance at which the spool 220 is moved, such that the first state (see Figs. 1 and 3), in which the first service brake line 331 communicates with the second service brake line 332 and the first parking brake line 321 communicates with the second parking brake line 322, and the second state (see Fig. 5), in which the first service brake line 331 communicates with the second parking brake line 322, are switchable therebetween. In detail, the predetermined distance is a distance between a first position (see Figs. 5 and 7) of the spool 220 forming the first state and a second position of the spool 220 forming the second state. In the first state, the spool 220 may be fixedly positioned at the first position since a latch piece 410 is inserted into a latch part 400 formed at the outer end of the spool 220, as illustrated in Figs. 6 and 8.

As illustrated in Figs. 6, 8, and 10, the first and second service brake lines 331 and 332 may be positioned deeper than the first and second parking brake lines 321 and 322 (in the right direction in Figs. 6, 8, and 10) within the valve hole 210. Thus, the spool 220 may be set to more easily move, particularly between the first position forming the first state and the second position forming the second state.

In detail, when the spool 220 is moved to the first position for forming the first state, namely is moved outward from the valve hole 210 as illustrated in Figs. 6 and 4, in other words, when the inner end of the spool 220 is positioned further outward from the valve hole 210 than the position at which the first and second service brake lines 331 and 332 communicate with the valve hole 210, the spool 220 is away from the position at which both of the first and second service brake lines 331 and 332 communicate with the valve hole 210. Accordingly, the first service brake line 331 may easily communicate with the second service brake line 332. Thus, the supply or release of pressure through the first service brake line 331 may be easily applied to the first chamber 120 through the second service brake line 332.

In addition, when the spool 220 is moved to the second position for forming the second state, namely is moved inward from the valve hole 210 as illustrated in Fig. 6, in other words, when the inner end of the spool 220 is positioned further inward from the valve hole 210 than the position at which the first service brake line 331 communicates with the valve hole 210, the first service brake line 331 is disconnected from the second service brake line 332. Furthermore, a first spool conduit 222 formed in the spool 220 communicates with the first service brake line 331, and a second spool conduit 224 communicates with the second parking brake line 322. Consequently, the first service brake line 331 communicates with the second parking brake line 322.

In detail, the valve hole 210 includes a first hole portion 210a having a cylindrical hole and a second hole portion 210b that is connected to the inner end of the first hole portion 210a and has a cylindrical hole having a smaller diameter than that of the first hole portion 210a, as illustrated in Figs. 6, 8, and 10. In addition, the spool 220 includes a first cylindrical body portion 220a, the outer surface of which has a shape corresponding to the first hole portion 210a, and a second cylindrical body portion 220b which is connected to the end of the first cylindrical body portion 220a and the outer surface of which has a shape corresponding to the second hole portion 210b.

Since the second hole portion 210b is positioned further inward from the valve hole 210 than the first hole portion 210a in the valve hole 210, the first and second service brake lines 331 and 332 may communicate with the valve hole 210 in the second hole portion 210b thereof, and the first and second parking brake lines 321 and 322 may communicate with the valve hole 210 in the first hole portion 210a thereof. Thus, the first and second service brake lines 331 and 332 may be positioned deeper than the first and second parking brake lines 321 and 322 (in the right direction in Figs. 6, 8, and 10).

Here, the terms "cylindrical shape" and "corresponding shape" described in connection with the first and second hole portions 210a and 210b, and the first and second cylindrical body portions 220a and 220b do not mean only a mathematical cylindrical shape, but include all cylindrical shapes. For example, in the valve hole 210, even when an inclined portion, in which the inner end of the first hole portion 210a has a gradually reduced diameter, is present in a portion of the inner end of the first hole portion 210a, to which the second hole portion 210b is connected, as illustrated in Figs. 6, 8, and 10, the inclined portion may be regarded as a portion of the first hole portion 210a. In addition, in the spool 220, even when an inclined portion, in which the inner end of the first cylindrical body portion 220a has a gradually reduced diameter, is present in a portion of the inner end of the first cylindrical body portion 220a, to which the second cylindrical body portion 220b is connected, the inclined portion may be regarded as a portion of the first cylindrical body portion 220a.

Hereinafter, the shape of the spool 220 will be described in more detail. The spool 220 may include a spool body 220a/220b having the first and second cylindrical body portions 220a and 220b, and a spool groove 220c that is longitudinally formed from the spool body 220a/220b to a predetermined position. In addition, the spool 220 may include a first spool conduit 222 that is formed from the inner side of the spool groove 220c to the radially outer surface of the spool body 220a/220b to communicate with the first service brake line 331 when the spool 220 is positioned at the second position, and a second spool conduit 224 that is formed from the inner side of the spool groove 220c to the radially outer surface of the spool body 220a/220b to communicate with the second parking brake line 322 when the spool 220 is positioned at the second position.

That is, since the first and second conduits 222 and 224 are formed from the inner side of the spool groove 220c to the radially outer surface of the spool body 220a/220b, they are in fluid communication with the spool groove 220c. In addition, when the spool 220 is positioned at the second position, the first conduit 222 may communicate with the first service brake line 331 and the second conduit 224 may communicate with the second parking brake line 322. Therefore, when the spool is positioned at the second position, the first service brake line 331 may be in fluid communication with the second parking brake line 322 through the first conduit 222, the spool groove 220c, and the second conduit 224.

Moreover, a spool ball 220d, an elastic member 220e, and a support part 220f may be provided in the spool groove 220c. The elastic member 220e may press the spool ball 220d such that the spool ball 220d is positioned at the inner end of the spool groove 220c, while one end of the elastic member 220e supports the spool ball 220d and the other end thereof is supported by the support part 220f. The spool ball 220d has a diameter no greater than the spool groove 220c so as to be movable in the spool groove 220c.

This structure is to block the first conduit 222 by the spool ball 220d when the spool 220 is positioned at the second position.

In detail, in the case where one end of the first conduit 222 is formed at the inner end of the spool groove 220c and the other end thereof is formed at the radially outer surface of the spool body 220a/220b, in other words, in the case where the first conduit 222 is bent from the inner end of the spool groove 220c and is then formed to the radially outer surface of the spool body 220a/220b, the first conduit 222 is blocked by the spool ball 220d when the spool ball 220d is positioned at the inner end of the spool groove 220c in a state in which it is pressed by the elastic member 220e.

Here, the spool 220 is positioned at the second position, namely at a position for forming the second state in which the service brake line 331 may communicates with the parking brake line 322. Therefore, when a larger pressure than the pressing force of the elastic member 220e is supplied through the service brake line 331, the spool ball 220d may move in the left direction in Fig. 6 against the pressing force of the elastic member 220e, thereby forming a fluid communication passage between the service brake line 331 and the parking brake line 322.

Through such a configuration, the fluid communication passage may be formed between the service brake line 331 and the parking brake line 322 only when a pressure is supplied through the service brake line 331, particularly a driver presses the brake pedal connected to the service brake line 331, in the second state in which the service brake line 331 may communicates with the parking brake line 322.

Meanwhile, the above-mentioned elastic member 220e may be a spring. Besides, a variety of elastic members may be used. In addition, the support part 220f may be a part inserted into the spool groove 220c from the outside thereof, and may be formed to secure air-tightness such that the spool groove 220c is not in communication with the outside of the spool groove 220c. In order to surely secure the air-tightness, a separate oil ring 220h may be provided outside the first cylindrical body portion 220a. The oil ring 220h may be an O-ring.

In addition, an oil ring 220g for securing air-tightness may be provided between the inner end of the spool 220 and the first conduit 222 and between the first conduit 222 and the second conduit 224 such that the fluid for supplying a pressure from the first service brake line 331 is introduced only into the first conduit 222 when the spool 220 is positioned at the second position. The oil ring 220g may be an O-ring.

In a yet further embodiment of the present invention, a drive restraint body may include a parking brake and a drive restraint valve may include a parking brake valve. In this case, the drive restraint valve may be operated by an anti-roll-back button. When the anti-roll-back button is turned on, the parking brake valve may be turned off to maintain a vehicle in a stopped state.

In a still further embodiment of the present invention, a drive restraint body may include a first clutch 11 for forward driving, a second clutch 12 for reverse driving, and a parking brake, and a drive restraint valve may include a first clutch valve 21 that turns on/off the first clutch 11, a second clutch valve 22 that turns on/off the second clutch 12, and a parking brake valve that allows an oil pressure to be supplied or not to the parking brake. The first and second clutches 11 and 12 and the parking brake valve may be controlled according to the predetermined angle of an accelerator pedal or the predetermined RPM of an engine.

Hereinafter, the present invention will continue to be described with respect to a vehicle that is temporarily driven by the operation of a brake emergency release device in the state in which the vehicle is stopped by the operation of a negative brake system due to defects such as leakage of fluid while an oil pressure is supplied in the state in which a service brake is not basically interlocked with a parking brake. Since the oil pressure is not basically supplied between the service brake and the parking brake in the vehicle, it is possible to prevent a pedal from suddenly protruding according to the application and recovery of the oil pressure to and from the service brake and the parking brake when the pedal is operated.

In the following description, the heading direction, forward direction, and forward-backward direction of the vehicle mean a direction perpendicular to the drive shaft of the axle 100.

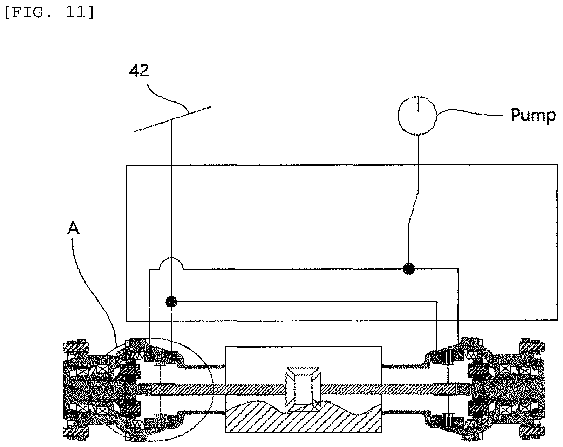

Fig. 11 is a partial cross-sectional view illustrating an axle 100 and wheels 180 according to embodiments of the present invention.

Referring to Fig. 11, the axle 100 may extend to both sides of a differential gear, and the axle 100 may be coupled to hubs at the wheels 180. A braking unit A may be positioned at each of the hubs. A service brake configured to determine application or recovery of an oil pressure according to whether or not to operate a service brake pedal 42, and a parking brake configured to determine application or recovery of an oil pressure by a pump or the like, may be positioned at the braking unit A. The service brake and the parking brake are arranged to stop rotation of each of the wheels by friction with brake discs according to the movement of the oil pressure.

For example, the brake discs may be pressed by the movement of the oil pressure by positioning the service brake and the parking brake in one direction or in both directions of the brake discs. Furthermore, the service brake and the parking brake may press one of the brake discs, and at least one of the service brake and the parking brake may be operated in a negative brake manner.

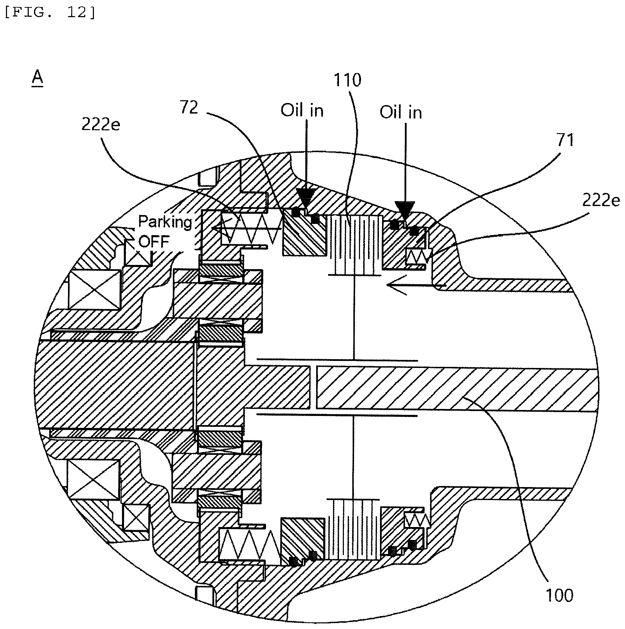

Third and fourth embodiments in which a service brake and a parking brake are positioned in both directions of brake discs and the parking brake is a negative brake will be described later with reference to Figs. 12 to 15.

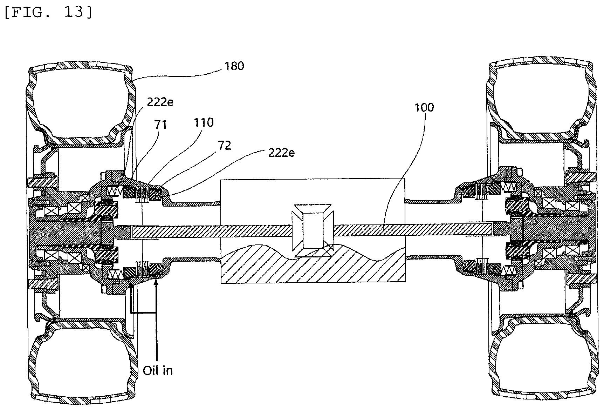

Figs. 12 and 13 are views illustrating a braking unit A according to the third embodiment of the present invention.

Referring to Figs. 12 and 13, a parking brake block 72 and a service brake block 71 may be respectively positioned at one and the other of brake discs 110 rotated along with the rotation of an axle 100. The brake blocks 71 and 72 may be moved by tension and compression of an elastic member 220e supported by a peripheral structure such as a housing.

For example, the elastic member 220e may separate the parking brake block 72 from the associated brake disc 110 while elastic member 220e is compressed by the oil pressure applied thereto. That is, the braking force may be cut off from the parking brake block by application of the oil pressure to the elastic member, whereas the braking force may be applied to the parking brake block by blocking the oil pressure from the elastic member. On the other hand, the service brake positioned at the other brake disc may be tensioned by an oil pressure applied to the elastic member 220e so that the service brake block 71 comes into contact with the associated brake disc. That is, the braking force may be applied to the service brake block by application of the oil pressure to the elastic member, whereas the braking force may be cut off from the service brake block by blocking the oil pressure from the elastic member.

The present embodiment is an example in which the above negative brake is used as the parking brake. In this case, the parking brake may be operated so as not to move the vehicle when a defect such as leakage of oil occurs during application or recovery of an oil pressure. The operation of the parking brake may prevent a rolling accident due to the defect of oil pressure in a sloping road. In addition, when the vehicle is stopped in the production line for moving heavy equipment adopting the embodiment of the present invention, such as high-heavy devices or raw materials, the parking brake may be temporarily released by bypassing the hydraulic path described with reference to Figs. 5 to 10. According to the release of the parking brake, the vehicle may move and the production line may continue to operate.

In addition, since the brake discs 110 rotate together with the axle 100, the disc brake and the parking brake are positioned in parallel to the longitudinal direction of the axle 100. Therefore, the service brake and the parking brake are positioned in parallel to each other and have respective contact surfaces that are in contact with the brake discs 110. Accordingly, the brake blocks 71 and 72 may have a lower wear rate and a longer replacement period, compared to the structure in which a braking force is applied while only one of service and parking brakes comes into contact with brake discs.

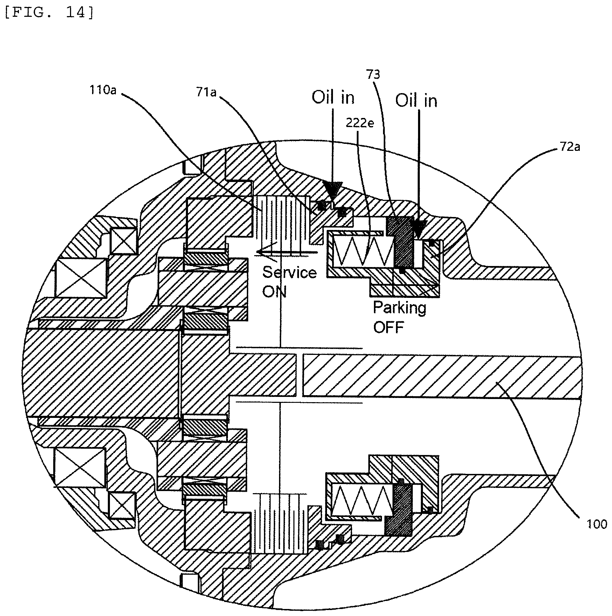

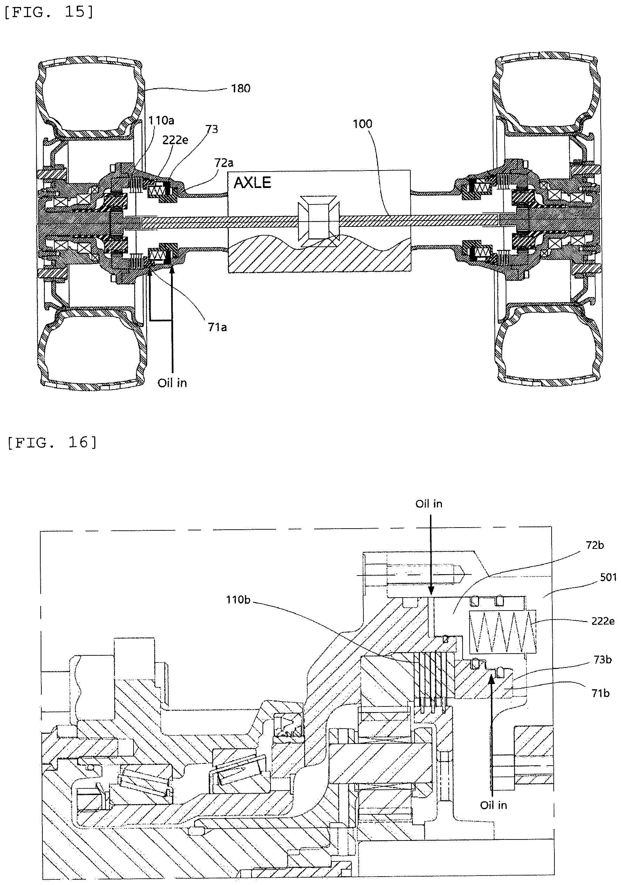

Figs. 14 and 15 are views illustrating a braking unit A according to a fourth embodiment of the present invention.

Referring to Figs. 14 and 15, a parking brake block 72a and a service brake block 71a may be respectively positioned at one and the other of brake discs 110a rotated along with the rotation of an axle 100. The brake blocks 71a and 72a may be moved by tension and compression of an elastic member 220e supported by a support 73 fixed to a housing or the like. For example, the elastic member 220e may move and compress the parking brake block 72a by applying an oil pressure to the parking brake block 72a.

The moving parking brake block 72a may not come into direct contact with the associated brake disc 110a, but may come into contact with the brake disc 110a by pushing the service brake block 71a, which is positioned between the brake disc 110a and the parking brake block 72a, by movement of the parking brake block 72a.

In addition, the service brake block 71a may move to the associated brake disc 110a by application of an oil pressure to the service brake, thereby generating a braking force.

Through such a mechanism, the service brake block 71a and the parking brake block 72a may overlap each other in the movement direction of the blocks 71a and 72a, and they may further overlap each other in a direction perpendicular to the movement direction. That is, the service brake block 71a and the parking brake block 72a may overlap each other in a direction parallel to the extension direction of the drive shaft of the axle 100 and may overlap each other in a direction perpendicular to the drive shaft.

In the present embodiment, the parking brake is a negative brake. In this case, the parking brake may be operated so as not to move the vehicle when a defect such as leakage of oil occurs during application or recovery of an oil pressure. The operation of the parking brake may prevent a rolling accident due to the defect of oil pressure in a sloping road. In addition, when the vehicle is stopped in the production line for moving heavy equipment adopting the embodiment of the present invention, such as high-heavy devices or raw materials, the parking brake may be temporarily released by bypassing the hydraulic path described with reference to Figs. 5 to 10. According to the release of the parking brake, the vehicle may move and the production line may continue to operate.

In addition, the brake discs 110a rotate together with the axle 100, and the service brake and the parking brake overlap each other in the heading direction of the vehicle in one of the brake discs 110a. Therefore, the housing may require a predetermined space in which the blocks 71a and 72a are accommodated in the forward-backward direction of the vehicle. Only the service brake block 71a from among the parking brake block 72a and the service brake block 71a has a contact surface that is in contact with the associated brake disc 110a. Therefore, since the parking brake block 72a is not in direct contact with the brake disc 110a in the process of applying a braking force, it is not necessary to replace the parking brake block due to abrasion.

Furthermore, since the brake blocks 71a and 72a overlap each other in the heading direction of the vehicle, the space in the housing, which is occupied in the direction of the axle by the brake blocks 71a and 72a, may be reduced. This reduction of the space may realize a vehicle having wheels with a smaller width therebetween.

Fig. 16 is a view illustrating a braking unit V according to a fifth embodiment of the present invention.

Referring to Fig. 16, a parking brake block 72b and a service brake block 71b may be respectively positioned at one and the other of brake discs 110b rotated along with the rotation of an axle 100. The brake blocks 71b and 72b may be moved by tension and compression of an elastic member 220e supported by a support 73 fixed to a housing or the like. For example, the elastic member 220e may move and compress the parking brake block 72b by applying an oil pressure to the parking brake block 72b.

The moving parking brake block 72b may not come into direct contact with the associated brake disc 110b, but may come into contact with the brake disc 110b by pushing the service brake block 71b, which is positioned between the brake disc 110b and the parking brake block 72b, by movement of the parking brake block 72b.

In addition, the service brake block 71b may move to the associated brake disc 110b by application of an oil pressure to the service brake, thereby generating a braking force.

Through such a mechanism, the service brake block 71b and the parking brake block 72b may overlap each other in the movement direction of the blocks 71b and 72b, and they may further overlap each other in a direction perpendicular to the movement direction. That is, the service brake block 71a and the parking brake block 72a may overlap each other in a direction parallel to the extension direction of the axle 100 and may overlap each other in the heading direction of the vehicle.

In the present embodiment, the parking brake is a negative brake. In this case, the parking brake may be operated so as not to move the vehicle when a defect such as leakage of oil occurs during application or recovery of an oil pressure. The operation of the parking brake may prevent a rolling accident due to the defect of oil pressure in a sloping road. In addition, when the vehicle is stopped in the production line for moving heavy equipment adopting the embodiment of the present invention, such as high-heavy devices or raw materials, the parking brake may be temporarily released by bypassing the hydraulic path described with reference to Figs. 5 to 10. According to the release of the parking brake, the vehicle may move and the production line may continue to operate.

In addition, the brake discs 110b rotate together with the axle 100, and the service brake and the parking brake overlap each other in the heading direction of the vehicle in one of the brake discs 110b. Therefore, the housing may require a predetermined space in which the blocks 71b and 72b are accommodated in the forward-backward direction of the vehicle.

The forward-backward direction and heading direction of the vehicle mean a direction perpendicular to the drive shaft of the axle 100. Meanwhile, since the brake blocks 71b and 72b overlap each other in the heading direction of the vehicle (for instance, the service brake block 71b may have a smaller width than the parking brake block 72b and the overlapping area therebetween may be equal to the area in which the service brake block 71b is directed in the heading direction of the vehicle), the space in the housing, which is occupied in the direction of the drive shaft of the axle 100 by the brake blocks 71b and 72b, may be reduced. This reduction of the space may realize a vehicle having wheels with a smaller width therebetween. Particularly, in the present embodiment, the parking brake block 72b may overlap the service brake block 71b in the forward-backward direction (vertical direction) of the vehicle and they may be arranged in the forward direction (vertical direction) of the vehicle.

In addition, only the service brake block 71b from among the parking brake block 72b and the service brake block 71b has a contact surface that is in contact with the associated brake disc 110b. Therefore, since the parking brake block 72b is not in direct contact with the brake disc 110b in the process of applying a braking force, it is not necessary to replace the parking brake block due to abrasion.

Furthermore, in the present embodiment, the service brake block 71b may be not supported by the housing 501 and the support 73 (see Fig. 14), but may be supported by the parking brake block 72b. The parking brake block 72b may be supported by the housing 501 and moved by the elastic member 220e.

In accordance with a still yet further embodiment of the present invention, there may be provided a vehicle including at least one of the above embodiments.

Although the present invention has been described with respect to the illustrative embodiments, it will be apparent to those skilled in the art that various variations and modifications may be made without departing from the spirit and scope of the invention as defined in the following claims.

### [Description of Reference Numerals]

1: clutch
11: first clutch
12: second clutch
2: clutch valve
21: first clutch valve
22: second clutch valve
3: line
31: clutch line
32: parking brake line
33: service brake line
311: first clutch line
312: second clutch line
321: first parking brake line
322: second parking brake line
331: first service brake line
332: second service brake line
4: pedal
41: accelerator pedal
42: service brake pedal
5: control unit
6: transmission
7: brake assembly
71, 71a, 71b: service brake block
72, 72a, 72b: parking brake block
73: support
8: accelerator
9: parking brake valve
10: parking valve
100: axle
110, 110a, 110b: brake disc
120: first chamber
122, 132: chamber block
124, 134: elastic means
130: second chamber
180: wheel
210: valve hole
210a: first hole portion
210b: second hole portion
220: spool
220c: spool groove
220a: first cylindrical body portion
220b: second cylindrical body portion
220c: spool groove
220d: spool ball
220e: elastic member
220f: support part
220h: oil ring
222: first spool conduit
224: second spool conduit
250: protrusion
260: guide groove
400: latch part
410: latch piece
501: housing
A: braking unit

## Claims

1. A vehicle driving device comprising:
a control unit;
at least one drive restraint body controlled by the control unit to restrain driving of a vehicle; and
a drive restraint valve allowing an oil pressure to be supplied or not to the drive restraint body,
wherein the drive restraint body is positioned at an axle and is operated to stop rotation of the axle so that the vehicle is maintained in a stopped state.

2. The vehicle driving device according to claim 1, wherein:
the drive restraint body further comprises drive restraint bodies positioned at respective wheels; and
the drive restraint bodies positioned at the respective wheels are pressed from friction objects in both directions thereof to apply braking forces to the wheels.

3. The vehicle driving device according to claim 2, wherein:
the drive restraint body comprises a service brake and a parking brake respectively positioned and operated at one and the other of the friction objects; and
the service brake and the parking brake are operated by the oil pressure supplied thereto.

4. The vehicle driving device according to claim 1, wherein the drive restraint bodies positioned at the respective wheels are pressed from friction objects in one direction thereof to apply braking forces to the wheels.

5. The vehicle driving device according to claim 4, wherein each of the drive restraint bodies comprises a service brake having a service brake block and a parking brake having a parking brake block.

6. The vehicle driving device according to claim 5, wherein the service brake block and the parking brake block overlap each other in a forward direction of the vehicle and in a direction of a drive shaft of the axle.

7. The vehicle driving device according to claim 6, wherein the service brake block and the parking brake block overlap each other in a direction perpendicular to the direction of the drive shaft.

8. The vehicle driving device according to claim 6, wherein the service brake block is positioned closer to a center of rotation of the drive shaft than the parking brake block.

9. The vehicle driving device according to claim 6, wherein the parking brake block is positioned closer to a center of rotation of the drive shaft than the service brake block.

10. The vehicle driving device according to claim 5, wherein the service brake is a positive brake, and the parking brake is a negative brake.

11. The vehicle driving device according to claim 10, wherein:
the service brake is a positive brake, and the parking brake is a negative brake; and
the vehicle driving device further comprises a brake emergency release device configured to independently apply or recover the oil pressure to or from the service brake and the parking brake and to selectively supply the oil pressure to the service brake and the parking brake.

12. The vehicle driving device according to claim 1, wherein:
the drive restraint body comprises a first clutch for forward driving and a second clutch for reverse driving; and
the drive restraint valve comprises a first clutch valve configured to turn on/off the first clutch, and a second clutch valve configured to turn on/off the second clutch.

13. The vehicle driving device according to claim 12, wherein the control unit controls the first and second clutch valves by a predetermined angle of an accelerator pedal or an RPM of an engine.

14. The vehicle driving device according to claim 11, wherein the predetermined angle of the pedal or the predetermined RPM of the engine is determined by a gradient of the ground on which the vehicle is located.

15. The vehicle driving device according to claim 12, wherein when an angle of the accelerator pedal or an RPM of the engine reaches a predetermined value according to the gradient of the ground, the first or second clutch valve is turned off.

16. The vehicle driving device according to claim 15, wherein when the angle of the accelerator pedal or the RPM of the engine reaches the predetermined value so that the first clutch valve is turned off, the vehicle reverses by cut-off of power through the first clutch.

17. The vehicle driving device according to claim 15, wherein when the angle of the pedal or the RPM of the engine reaches the predetermined value so that the second clutch valve is turned off, the vehicle is driven forward by cut-off of power through the second clutch.

18. The vehicle driving device according to claim 15, wherein when the angle of the accelerator pedal is less than a predetermined angle or the RPM of the engine is less than a predetermined RPM value in the vehicle, the first and second clutch valves are simultaneously maintained in an ON state so that the vehicle is maintained in the stopped state.

19. The vehicle driving device according to claim 1, wherein the first and second clutches are simultaneously turned on at the time when the vehicle is started, with the consequence that the vehicle is maintained in the stopped state.

20. The vehicle driving device according to claim 1, wherein the control unit reads a vehicle signal indicative of the angle of the pedal or the RPM of the engine to control the first and second clutches.

21. The vehicle driving device according to claim 1, wherein:
the drive restraint body comprises a parking brake; and
the drive restraint valve comprises a parking brake valve.

22. The vehicle driving device according to claim 21, wherein the drive restraint valve is operable by an anti-roll-back button.

23. The vehicle driving device according to claim 21, wherein when the anti-roll-back button is turned on, the parking brake valve is turned off so that the vehicle is maintained in the stopped state.

24. The vehicle driving device according to claim 23, wherein when an accelerator pedal is pressed in the state in which the vehicle is stopped, the parking brake valve is slowly turned on according to the RPM, and when the RPM is equal to or greater than a predetermined value, the vehicle is driven.

25. The vehicle driving device according to claim 1, wherein:
the drive restraint body comprises a first clutch for forward driving, a second clutch for reverse driving, and a parking brake; and
the drive restraint valve comprises a first clutch valve configured to turn on/off the first clutch, a second clutch valve configured to turn on/off the second clutch, and a parking brake valve configured to allow the oil pressure to be supplied or not to the parking brake.

26. A vehicle driving device comprising:
a control unit;
a drive restraint body controlled by the control unit to restrain driving of a vehicle, and comprising a service brake and a parking brake; and
a drive restraint valve allowing an oil pressure to be supplied or not to the drive restraint body,
wherein the drive restraint body is positioned at one of friction objects to apply braking forces for restraining the driving of the vehicle, the service brake and the parking brake overlap each other in a forward direction of the vehicle from a center of rotation of an axle in the vehicle, and the drive restraint body is operated to stop rotation of the axle so that the vehicle is maintained in a stopped state.

27. The vehicle driving device according to claim 26, wherein the service brake is positioned closer to the axle than the parking brake.

28. A method for vehicle driving, comprising:
allowing an oil pressure to be supplied or not to a drive restraint body, for restraining driving of a vehicle, using a drive restraint valve; and
controlling the drive restraint valve by a predetermined angle of an accelerator pedal or an RPM of an engine.

29. The method according to claim 28, wherein:
the drive restraint body comprises a first clutch for forward driving and a second clutch for reverse driving; and
the drive restraint valve comprises a first clutch valve configured to turn on/off the first clutch, and a second clutch valve configured to turn on/off the second clutch.

30. The method according to claim 29, wherein the first and second clutch valves are controlled by the predetermined angle of the accelerator pedal or the RPM of the engine.

31. The method according to claim 28, wherein the predetermined angle of the accelerator pedal or the predetermined RPM of the engine is determined by a gradient of the ground on which the vehicle is located.

32. The method according to claim 29, wherein when an angle of the pedal or an RPM of the engine reaches a predetermined value according to the gradient of the ground, the first or second clutch valve is turned off.

33. The method according to claim 29, wherein when the angle of the pedal or the RPM of the engine reaches the predetermined value so that the first clutch valve is turned off in order to reverse the vehicle, power of the first clutch is cut off.

34. The method according to claim 29, wherein when the angle of the pedal or the RPM of the engine reaches the predetermined value so that the second clutch valve is turned off in order to forwardly driving the vehicle, power is cut off through the second clutch.

35. The method according to claim 30, wherein when the angle of the accelerator pedal is less than a predetermined angle or the RPM of the engine is less than a predetermined RPM value in the vehicle, the first and second clutch valves are simultaneously maintained in an ON state so that the vehicle is maintained in a stopped state.

36. The method according to claim 29, wherein the first and second clutches are simultaneously turned on at the time when the vehicle is started, with the consequence that the vehicle is maintained in a stopped state.

37. The method according to claim 28, wherein:
the drive restraint body comprises a parking brake; and
the drive restraint valve comprises a parking brake valve.

38. The method according to claim 37, wherein the drive restraint valve is operated by an anti-roll-back button.

39. The method according to claim 37, wherein when the anti-roll-back button is turned on, the parking brake valve is turned off so that the vehicle is maintained in a stopped state.

40. The method according to claim 28, wherein:
the drive restraint body comprises a first clutch for forward driving, a second clutch for reverse driving, and a parking brake;
the drive restraint valve comprises a first clutch valve configured to turn on/off the first clutch, a second clutch valve configured to turn on/off the second clutch, and a parking brake valve configured to allow the oil pressure to be supplied or not to the parking brake; and
the first and second clutches and the parking brake valve are controlled according to the predetermined angle of the accelerator pedal or the RPM of the engine.

41. A vehicle comprising the vehicle driving device according to any one of claims 1 to 27.

42. A vehicle controlled by the method for vehicle driving according to any one of claims 28 to 40.
